# EUROPÄISCHE PATENTSCHRIFT

(11) **EP 2 476 504 B1**
(45) Veröffentlichungstag und Bekanntmachung des Hinweises auf die Patenterteilung: **03.06.2015**
(21) Anmeldenummer: 11196018.3
(22) Anmeldetag: 29.12.2011
(51) Int. Cl.: B23K 26/34, B23K 26/14, B23K 26/00, B27C 9/00, B29C 37/00, B23P 23/02

(54) **Bearbeitungsvorrichtung**
Processing device
Dispositif de traitement

(30) Priorität: 14.01.2011 DE 102011002696
(43) Veröffentlichungstag der Anmeldung: 18.07.2012
(73) Patentinhaber: Homag Holzbearbeitungssysteme GmbH, 72296 Schopfloch (DE)
(72) Erfinder: Schmid, Johannes, 72181 Starzach/Wachendorf (DE); Petrak, Axel, 72160 Horb (DE)
(74) Vertreter: Hoffmann Eitle

(56) Entgegenhaltungen:
- EP-A1- 0 491 242
- EP-A1- 0 958 884
- EP-A1- 1 810 767
- EP-A2- 0 158 866
- DE-A1- 4 113 633
- DE-A1-102009 008 284
- US-A- 5 376 061
- US-A1- 2005 133 486

## Beschreibung

### Technisches Gebiet

Die vorliegende Erfindung betrifft eine Bearbeitungsvorrichtung nach dem Oberbegriff von Anspruch 1. Die US 5 376 061 A offenbart eine solche Bearbeitungsvorrichtung. Gattungsgemäße Bearbeitungsvorrichtungen kommen beispielsweise bei der Bearbeitung von Werkstücken zum Einsatz, die zumindest abschnittsweise aus Holz, Holzwerkstoffen, Kunststoffen, Metallen (wie Beschlägen) oder einer Kombination hiervon, aufgebaut sind z.B. in der Möbel- und Bauelementeindustrie.

### Stand der Technik

Strahlung, insbesondere Laserstrahlung, findet in verschiedenen Fertigungsprozessen zunehmende Anwendung, z.B. beim Trennen, Fügen oder Beschriften. Hierbei wird die durch die Strahlung erzeugte Wärme gezielt eingesetzt, um entsprechende Arbeitsschritte durchzuführen.

Allerdings ist es stets problematisch, eine Strahlführung in eine bekannte Bearbeitungsmaschine zu integrieren, und somit das Einsatzspektrum einer solchen Bearbeitungsmaschine um eine weitere Bearbeitungsart zu erweitern. Oft führen Überlegungen hinsichtlich der Integration einer Strahlführung in eine bekannte Bearbeitungsmaschine zu Nachteilen wie zusätzlichem Konstruktionsaufwand für die Anpassung einer Bearbeitungsvorrichtung an verschiedene Fertigungsaufgaben. Dies führt im Ergebnis zu erhöhten Kosten.

Als Stand der Technik ist die US 5 376 061 A bekannt, die alternativ ein Bearbeitungsverfahren und ein Laserstrahlbearbeitungsverfahren am Werkstück durchführen kann.

### Darstellung der Erfindung

Der vorliegenden Erfindung liegt die Aufgabe zugrunde, eine Bearbeitungsvorrichtung mit einer Strahlführungseinrichtung bereitzustellen, bei der die Strahlführungseinrichtung bestmöglich in die Maschine integriert wird, ohne die Funktionalität der Maschine zu beeinflussen.

Diese Aufgabe wird durch eine Vorrichtung gemäß Anspruch 1 gelöst. Vorteilhafte Ausführungsformen sind den Unteransprüchen zu entnehmen.

Der Erfindung liegt der Gedanke zugrunde, eine Strahlführungseinrichtung innerhalb einer Bearbeitungsmaschine derart vorzusehen, dass hierdurch keine wesentlichen Umbauten oder Neukonstruktionen erforderlich sind. Demnach soll an eine Bearbeitungsmaschine, mit der eine gängige Bearbeitung, wie z.B. eine spanende Bearbeitung, durchgeführt werden kann, über eine Schnittstelle eine Energieeinbringung vorgesehen werden, wobei die Weiterleitung der Energie, insbesondere der Strahlungsenergie, innerhalb der Vorrichtung abschnittsweise durch einen Hohlraum einer Welle und/oder einen Hohlraum innerhalb eines an die Welle angeschlossenen Aggregats verläuft.

Es ist in diesem Zusammenhang darauf hinzuweisen, dass der Begriff "Strahlung" im Sinne dieser Anmeldung weit auszulegen ist. Lediglich beispielhaft wird in dieser Anmeldung eine Laserstrahlung erwähnt. Allerdings sind auch Mikrowellenstrahlung, UV-Strahlung, Infrarot-Strahlung, Wärmestrahlung, usw. mit umfasst. Demnach ist "Strahlung" im Sinne dieser Anmeldung als Energieübertragung von einer Erzeugerquelle zu einer Bearbeitungszone zu verstehen. Erfindungsgemäß wird demnach eine Vorrichtung mit den Merkmalen des Anspruchs 1 bereitgestellt.

Gemäß der vorliegenden Erfindung ist das Bearbeitungsaggregat als sogenanntes Anbringaggregat ausgeführt. Mit diesem kann ein Beschichtungsmaterial auf ein Werkstück aufgebracht werden. Die über die erfindungsgemäße Vorrichtung zugeführte Strahlung wird in diesem Fall dazu verwendet, das Werkstück und/oder das Beschichtungsmaterial (ggf. unter Nutzung einer Wechselwirkung von Werkstück und Beschichtungsmaterial) zu aktivieren, bevorzugt zu erwärmen, um anschließend das Beschichtungsmaterial auf das Werkstück aufbringen zu können.

In einer bevorzugten Ausführungsform mündet der Hohlraum, der abschnittsweise in der Welle und/oder dem Wellenlagerabschnitt verläuft, im Bereich der Aufnahme für Bearbeitungswerkzeuge und/oder Bearbeitungsaggregate, oder in einem an die Welle angeschlossenen Aggregat. Letzteres kann beispielsweise als Spannfutter ausgebildet sein. Wird somit die Strahlung durch den Hohlraum geführt, so kommt die Strahlung letztlich am genannten Mündungsbereich an, und kann von dort aus in ein bestimmtes Bearbeitungsaggregat weitergeleitet werde, so z.B. ein Verleimaggregat.

Darüber hinaus ist es in einer Ausführungsform vorgesehen, dass sich der Hohlraum in Achsrichtung der Welle durch die gesamte Welle hindurch erstreckt. Somit kann die Welle selbst als Leitungsabschnitt für die Strahlung verwendet werden. Weiter kann es vorgesehen sein, dass sich der Hohlraum durch ein durch die Welle verlaufendes Spannmittel erstreckt. Bei einem solchen Spannmittel kann es sich beispielsweise um eine Zugstange handeln, mit der beispielsweise ein Spannfutter an der Welle lösbar angebracht werden kann. Auf diese Weise wird die Übertragung der Strahlung innerhalb der erfindungsgemäßen Vorrichtung besonders günstig integriert.

Weiter kann es vorgesehen sein, dass die Spindeleinheit in mindestens einer, bevorzugt in drei, unterschiedlichen Richtungen verfahrbar ist. Alternativ oder zusätzlich kann die Spindeleinheit um mindestens eine Achse verschwenkbar sein. Besonders bevorzugt ist die Ausgestaltung der Spindeleinheit als 5-Achs-Einheit (mindestens drei translatorische und 2 rotatorische Achsen).

Auch kann die Strahlungseinrichtung direkt oder indirekt mit der Spindeleinheit verbunden, oder gar mit dieser verfahrbar sein. Wird die Strahlungseinrichtung indirekt an die Spindeleinheit angeschlossen, so kann es vorgesehen sein, dass die Strahlungseinrichtung mehrere Vorrichtungen mit Strahlung bedient.

Weiter sind verschiedene Varianten denkbar, mit denen ein an der Welle angeschlossenes Bearbeitungsaggregat, bevorzugt Verleimaggregat, drehbar ist. Zum Einen kann eine Drehung des Bearbeitungsaggregats, und somit des austretenden Laserstrahls, durch eine Drehung der Welle und des daran befestigten Bearbeitungsaggregats erreicht werden. In einer anderen Variante ist das Bearbeitungsaggregat relativ zur Welle drehbar gelagert. In einer weiteren Variante kann anstelle der Welle auch ein zwischen Welle und Bearbeitungsaggregat angebrachtes Spannfutter gedreht werden.

In einer weiteren Ausführungsform ist das Bearbeitungsaggregat entweder in die Aufnahme der Welle oder in das an die Welle angeschlossene Aggregat (Spannfutter) einwechselbar und aus dieser/diesem entnehmbar. Hierdurch weist die erfindungsgemäße Vorrichtung eine besonders hohe Flexibilität auf, denn es können verschiedenartige Bearbeitungsaggregate eingewechselt werden, wobei teilweise die in die Vorrichtung zugeführte Strahlung für die Bearbeitung verwendet wird.

### Kurze Beschreibung der Zeichnungen

- Figur 1: zeigt eine Schnittansicht einer ersten bevorzugten Ausführungsform der vorliegenden Erfindung.
- Figur 2: zeigt eine Schnittansicht einer zweiten bevorzugten Ausführungsform der vorliegenden Erfindung.
- Figur 3: zeigt eine Schnittansicht einer dritten bevorzugten Ausführungsform der vorliegenden Erfindung.
- Figur 4: zeigt eine Draufsicht einer möglichen Variante der vorliegenden Erfindung.

### Bevorzugte Ausführungsformen der vorliegenden Erfindung

Nachfolgend werden unter Bezugnahme auf die beigefügten Zeichnungen bevorzugte Ausführungsformen der vorliegenden Erfindung im Detail erläutert.

### Ausführungsform 1

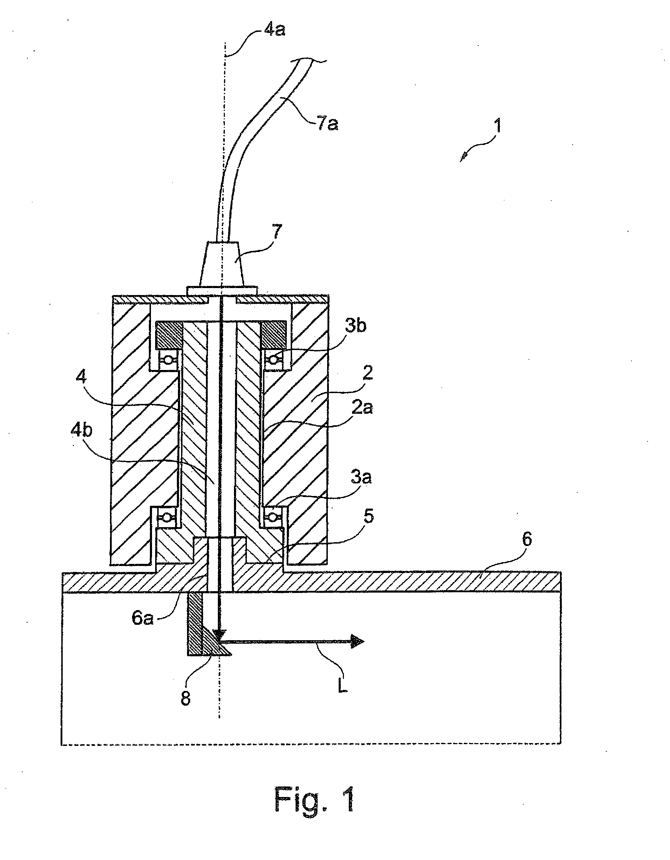

Figur 1 zeigt eine erste Ausführungsform der vorliegenden Erfindung in einer seitlichen Darstellung. Wie Figur 1 zu entnehmen, ist innerhalb der Bearbeitungsvorrichtung 1 (nicht im Detail dargestellt) ein Wellenlagerabschnitt 2 vorgesehen. Innerhalb des Wellenlagerabschnitts 2 ist ein Hohlraum 2a vorgesehen, in dem eine Welle 4 aufgenommen wird. Die Welle 4 stützt sich über die Lagerungen 3a, 3b gegenüber dem Wellenlagerabschnitt 2 drehbar ab, und kann über eine nicht dargestellte Antriebseinheit drehend angetrieben werden.

In einem Endabschnitt der Welle 4, der freigelegt ist, wenn kein Aggregat an der Welle angebracht ist, befindet sich ein Anschlussabschnitt 5, an dem verschiedene Bearbeitungsaggregate angebracht werden können. Im vorliegenden Beispiel ist am Anschlussabschnitt 5 der Welle 4 direkt ein Verleimaggregat 6 angebracht.

Innerhalb der Welle 4 ist ein sich entlang der Längsachse 4a der Welle 4 erstreckender Hohlraum 4b vorgesehen. Ein entsprechender, sich ebenfalls in Längsrichtung der Welle 4 erstreckender Hohlraum ist am Verleimaggregat 6 derart ausgebildet, dass sich die Hohlräume 4b und 6a in einem Bereich um die Längsachse der Welle aneinander anschließen.

An dem vom Anschlussabschnitt 5 entgegengesetzten Ende der Welle 4 ist am Wellenlagerabschnitt 2 ein Kollimator 7 angebracht, der über einen Lichtwellenleiter 7a mit einer nicht dargestellten Strahlgenerierungseinrichtung, hier einem Laser, verbunden ist. Alternativ hierzu kann die Strahlgenerierungseinrichtung auch direkt am Wellenlagerabschnitt 2, oder an der Bearbeitungsvorrichtung 1 angebracht sein.

Im vorliegenden Beispiel bewirkt der Kollimator 7, dass ein über den Lichtwellenleiter 7a zugeführte Laserstrahl L in den Hohlraum 4b der Welle 4 eingekoppelt wird, der dann entlang der Längsachse 4a der Welle 4 im Hohlraum 4b fortschreitet und über den am Verleimaggregat 6 vorgesehenen Hohlraum 6a in das Verleimaggregat 6 eintritt. Innerhalb des Verleimaggregats ist eine Optik 7, insbesondere ein Spiegel und/oder ein Prisma, vorgesehen, um den in das Verleimaggregat 6 eingekoppelten Laserstrahl L umzulenken. Die verschiedenen Bearbeitungsarten, die mit dem somit eingekoppelten Laserstrahl durchgeführt werden können, werden später erläutert. An dieser Stelle sei bereits erwähnt, dass innerhalb des Verleimaggregats weitere Spiegel vorgesehen sein können, damit der Laserstrahl L zur Bearbeitungszone umgelenkt wird.

Ausführungsform 1 gemäß Figur 1 hat hierbei insbesondere den Vorteil, dass neben dem Vorsehen einer Schnittstelle zur Einkopplung der Laserstrahlung lediglich ein Hohlraum 4b in der Welle 4 vorgesehen werden muss. Auch wird das Anbringen anderer Bearbeitungsaggregate (wie einem Fräser) bei einem Aggregatewechsel durch das Bereitstellen einer Hohlwelle nicht beeinflusst.

### Ausführungsform 2

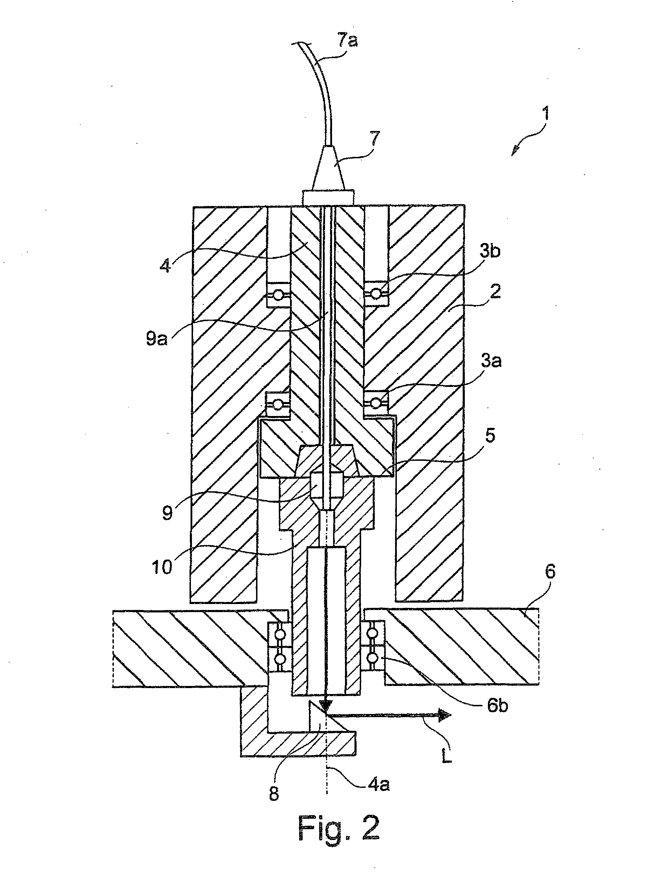

In Figur 2 ist eine zweite Ausführungsform der vorliegenden Erfindung dargestellt. Der bessern Übersicht halber werden für entsprechende Bauteile und Elemente die gleichen Bezugszeichen verwendet wie in der vorangegangenen ersten Ausführungsform.

Die zweite Ausführungsform der vorliegenden Erfindung unterscheidet sich von der ersten Ausführungsform im Wesentlichen dadurch, dass an der Welle 4 mittels eines Spannmittels (Zugstange) 9 ein Spannfutter 10 befestigt ist. Wie in der ersten Ausführungsform wird ein Laserstrahl entlang der Längsachse der Welle geleitet. Allerdings ist innerhalb der Welle 4 das Spannmittel 9 aufgenommen. Das Spannmittel 9 weist jedoch in der Längsrichtung einen Hohlraum 9a auf, durch den die durch den Kollimator 7 eingekoppelte Strahlung durch die Welle 4 geleitet wird, am Ende des Spannmittels 9 in das Spannfutter 10 geleitet wird, von wo aus es in das Verleimaggregat 6 weitergeführt wird. Hierbei ist es gemäß Ausführungsform 2 der vorliegenden Erfindung vorgesehen, dass das Verleimaggregat 6 mittels einer Lagerung 6b drehbar am Spannfutter 10 angebracht ist. Somit kann der Laserstrahl L über die Welle 4 und das Spannfutter 10 in das Verleimaggregat 6 geführt werden, während sich das Verleimaggregat 6 während der Bearbeitung um das Spannfutter 10 drehen kann.

Alternativ hierzu kann auch, wie in Ausführungsform 1, die Lagerung 6b weggelassen werden, wodurch die Welle 4, das Spannfutter 10 und das Verleimaggregat 6 drehfest miteinander verbunden sind. Wird eine Drehung des Laserstrahls L in eine andere Austrittsrichtung gewünscht, wird die Welle 4 wie in Ausführungsform 1 gedreht.

In einer zu dieser Alternative weiteren Variante kann ebenfalls die Lagerung 6b weggelassen werden, wodurch Spannfutter 10 und das Verleimaggregat 6 drehfest miteinander verbunden sind. In diesem Fall könnte eine Drehbewegung zwischen dem Spannfutter 10 und der Welle 4 herbeigeführt werden. Somit wäre die Einheit aus dem Spannfutter 10 und dem Verleimaggregat 6 gemeinschaftlich drehbar.

Ebenso ist es möglich, die Welle 4 verdrehfest anzuordnen, und nur das Spannfutter 10 verdrehbar vorzusehen, das dann als "Welle" fungiert.

### Ausführungsform 3

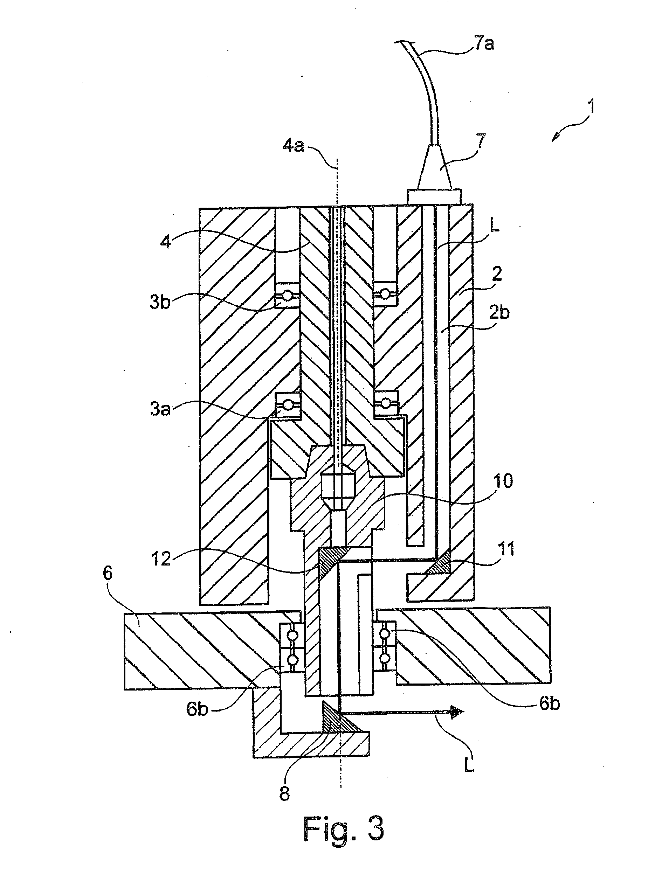

In Figur 3 ist eine dritte Ausführungsform der vorliegenden Erfindung gezeigt, die eine Modifikation der zweiten Ausführungsform darstellt. Hierbei wird der Laserstrahl L nicht entlang der Längsachse der Welle 4 geführt, sondern in einer zur Längsachse im Wesentlichen senkrechten Richtung in das Spannfutter 10 eingekoppelt, und anschließend zum Verleimaggregat 6 weitergeleitet.

Hierzu ist der Kollimator 7 in dieser dritten Ausführungsform nicht koaxial zur Längsachse der Welle 4, sondern in einem anderen Bereich der Wellenlagerung oder auch in einem anderen Bereich der Bearbeitungsmaschine angebracht. Der Laserstrahl L wird vom Kollimator 7 in einen Hohlraum 2b des Wellenlagerabschnitts 2 eingekoppelt und entlang des Hohlraums 2b geführt. Im vorliegenden Ausführungsbeispiel verläuft dieser Hohlraum 2b parallel zur Längsachse 4a der Welle 4. Bei Anbringung einer entsprechenden Optik kann jedoch auch eine andere Strahlführung innerhalb des Wellenlagerabschnitts 2 realisiert werden.

Um den Laserstrahl L nach Eintritt in den Hohlraum 2b des Wellenlagerabschnitts 2 umzulenken, ist eine Optik 11 (z. B. ein Spiegel und/oder ein Prisma oder dergleichen) innerhalb des Hohlraums 2b vorgesehen. Diese bewirkt, dass der Laserstrahl L, wie bereits beschrieben, in einer zur Längsachse 4a der Welle 4 senkrechten Richtung in das Spannfutter 10 geleitet wird. Im Spannfutter 10 ist eine weitere Optik 12 vorgesehen, die den Laserstrahl L in eine zur Längsachse 4a der Welle 4 koaxialen oder identischen Richtung umlenkt.

Die Ausführungsform gemäß Fig. 3 ermöglicht aufgrund des größeren Bauraumes auch den Einsatz eines Lasers mit schlechterer Strahlqualität.

### Weitere Modifikationen

In den vorliegenden Ausführungsformen wird von einer Leitung eines Laserstrahls gesprochen. Allerdings umfasst die vorliegende Erfindung auch andere Energiearten und deren Weiterleitung. Neben Laserstrahlung ist hier beispielsweise infrarotes Licht oder Mikrowellenstrahlung zu nennen. Auch ist es denkbar, eine andere Strahlung, beispielsweise auch Wärmenergie, in der vorliegenden Vorrichtung zu leiten.

Die vorliegende Bearbeitungsvorrichtung bezieht sich sowohl auf eine Bearbeitungsvorrichtung in der Durchlauftechnik, als auch auf CNC-Bearbeitungsmaschinen. Letztere kann in Ausleger- oder Portalbauweise, insbesondere mit einem Fahrportal, ausgerüstet sein. Auch ist der Einsatz bei Maschinen mit Parallelkinematik oder bei Robotern etc. möglich. Dabei können unterschiedlichste Aggregate zum Einsatz kommen, obgleich vorstehend beispielhaft ein Kantenanleimaggregat beschrieben wurde.

So kann das Aggregat auch in Form einer in die Werkzeugaufnahme einsetzbaren Fokussiereinrichtung, insbesondere Optik ausgebildet sein. Hierdurch können beispielsweise direkt Bearbeitungen am Werkstück mittels der von der Strahlungseinrichtung zugeführten Strahlung durchgeführt werden.

Wie bereits erläutert, kann eine Strahlungseinrichtung (oder auch allgemein eine Energieerzeugungseinrichtung) für eine einzelne Bearbeitungsvorrichtung, oder auch für eine Vielzahl von Bearbeitungsvorrichtungen vorgesehen sein. Im letzteren Fall wäre dann beispielsweise ein Verteiler vorzusehen, der beispielsweise über eine zentrale Steuereinrichtung betätigt wird, um die von der Strahlungseinrichtung erzeugte Laserstrahlung zur entsprechenden Bearbeitungsvorrichtung zu leiten.

Ferner können zusätzlich zu der Strahlungseinrichtung auch weitere und ggf. andersartige Energiequellen vorgesehen sein, beispielsweise um einen oder mehrere der jeweiligen Fügepartner vorzuwärmen.

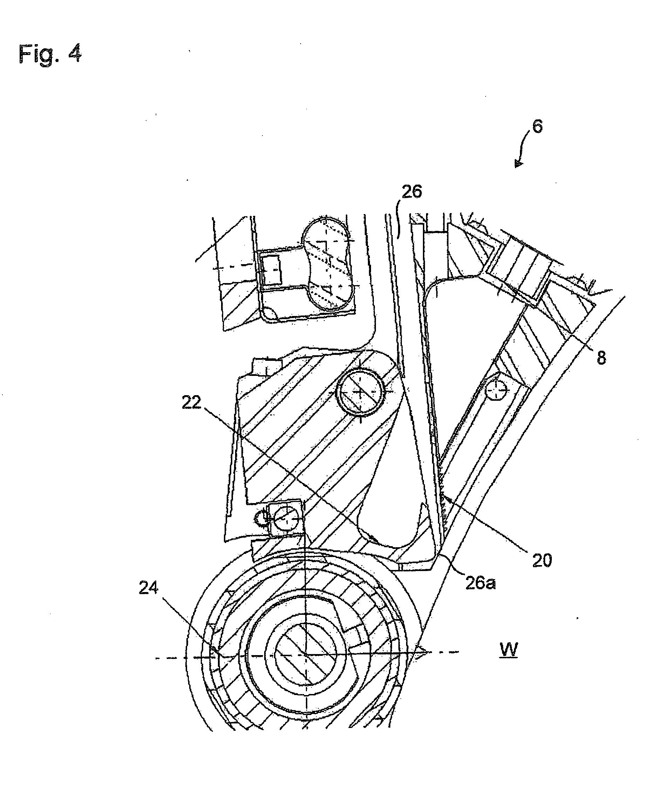

Eine weitere Modifikation der vorliegenden Erfindung, die mit allen oben beschriebenen Ausführungsformen vorteilhaft kombiniert werden kann, ist in Fig. 4 in einer Draufsicht schematisch dargestellt. Fig. 4 zeigt die Ausgestaltung eines Anbringaggregats 6 zum Anbringen eines Beschichtungsmaterials an ein Werkstück W. Dabei wird das Beschichtungsmaterial durch einen Zufuhrkanal 26 durch das Aggregat 6 hindurchgeführt und tritt an einer Austrittsöffnung 26a aus, um anschließend mittels einer Andruckrolle 24 an das Werkstück W angedrückt zu werden.

Das Beschichtungsaggregat 6 besitzt in der vorliegenden Ausführungsform einen Umlenkspiegel 8, mittels dessen zugeführte Strahlung (beispielsweise Laserstrahlung) in Richtung einer Strahlfalle 22 auf das Beschichtungsmaterial umgelenkt werden kann. Dabei trifft die Strahlung in der vorliegenden Ausführungsform unter einem von 90° abweichenden Winkel auf das Beschichtungsmaterial, wobei je nach Beschichtungsmaterial und Strahlungsart Reflektionen auftreten können.

Vor diesem Hintergrund besitzt das Beschichtungsaggregat 6 in der vorliegenden Ausführungsform eine
Strahlungsreflexionseinrichtung, die in der vorliegenden Ausführungsform als profilierte Fläche 20 ausgebildet ist. Diese Fläche ist derart angeordnet und eingerichtet, dass von dem Beschichtungsmaterial reflektierte Strahlung erneut auf das Beschichtungsmaterial reflektiert wird. Dabei ist die Profilierung derart ausgestaltet, dass die auf die Profilierung auftreffende Strahlung nicht oder nur in geringem Ausmaß aus der Austrittsöffnung 66a austreten kann, sodass die Strahlung von der Austrittsöffnung 26a ferngehalten wird.

Neben der in Fig. 4 gezeigten Ausgestaltung und Anordnung der Strahlreflexionseinrichtung 20 sind auch zahlreiche andere Konfigurationen denkbar, die dazu geeignet sind, von dem Beschichtungsmaterial reflektierte Strahlung auf das Beschichtungsmaterial zu reflektieren.

## Patentansprüche

1. Vorrichtung zum Bearbeiten, insbesondere Beschichten von Werkstücken, die bevorzugt zumindest abschnittsweise aus Holz, Holzwerkstoffen, Kunststoff oder dergleichen bestehen, mit:
einer Strahlungseinrichtung zum Erzeugen und/oder Übertragen einer Strahlung, vorzugsweise eines Laserstrahls, und
einer Spindeleinheit mit einer in einem Wellenlagerabschnitt (4a) drehbaren Welle (4) und einer Aufnahme (5) für Bearbeitungswerkzeuge und/oder Bearbeitungsaggregate,
wobei
die Welle (4) und/ oder ein an die Welle angebrachtes Aggregat (10) zumindest abschnittsweise einen Hohlraum (4b, 9a, 2b) aufweisen, und
die Strahlungseinrichtung derart angeordnet ist, dass die Strahlung zumindest abschnittsweise innerhalb des Hohlraumes verläuft, **dadurch gekennzeichnet, dass** die Vorrichtung ferner als Bearbeitungsaggregat ein Anbringaggregat (6) zum Anbringen von Beschichtungsmaterial auf Werkstücke aufweist.

2. Vorrichtung nach Anspruch 1, **dadurch gekennzeichnet, dass** der Hohlraum im Bereich der Aufnahme (5) für Bearbeitungswerkzeuge und/oder Bearbeitungsaggregate oder in dem an die Welle (4) angeschlossenen Aggregat (10) mündet.

3. Vorrichtung nach Anspruch 1 oder 2, **dadurch gekennzeichnet, dass** sich der Hohlraum in Achsrichtung der Welle (4) durch die gesamte Welle (4) hindurch erstreckt.

4. Vorrichtung nach einem der vorhergehenden Ansprüche, **dadurch gekennzeichnet, dass** sich der Hohlraum (9a) durch ein sich durch die Welle (4) erstreckendes Spannmittel (9) erstreckt, welches Spannmittel (9) sich insbesondere in der Axialrichtung der Welle (4) erstreckt und zur Aufnahme des Aggregats (10) eingerichtet ist.

5. Vorrichtung nach einem der vorhergehenden Ansprüche, **dadurch gekennzeichnet, dass** mindestens eine Spindeleinheit in mindestens einer, bevorzugt in drei, unterschiedlichen Richtungen verfahrbar ist.

6. Vorrichtung nach einem der vorhergehenden Ansprüche, **dadurch gekennzeichnet, dass** mindestens eine Strahlungseinrichtung direkt oder indirekt mit einer Spindeleinheit verbunden und bevorzugt mit dieser verfahrbar ist.

7. Vorrichtung nach einem der vorhergehenden Ansprüche, **dadurch gekennzeichnet, dass** sie ferner eine erste Übertragungseinrichtung (7a) für Strahlung aufweist, die eingerichtet ist, von der Strahlungseinrichtung erzeugte Strahlung zu dem Hohlraum der Welle zu übertragen.

8. Vorrichtung nach einem der vorhergehenden Ansprüche, **dadurch gekennzeichnet, dass** sie ferner eine zweite Übertragungseinrichtung für Strahlung aufweist, die eingerichtet ist, von dem Hohlraum der Welle austretende Strahlung zu einer Bearbeitungszone, insbesondere zu einem Werkstück oder einem an das Werkstück anzufügenden Bauteil, zu übertragen.

9. Vorrichtung nach Anspruch 7 oder 8, **dadurch gekennzeichnet, dass** die mindestens eine Übertragungseinrichtung mindestens einen Strahlungsleiter aufweist, der ausgewählt ist aus einer reflektierenden oder transmittierenden Optik, insbesondere aus der Gruppe bestehend aus Lichtwellenleiter, Spiegel, Linse und Prisma.

10. Vorrichtung nach Anspruch 1, **dadurch gekennzeichnet, dass** das Bearbeitungsaggregat (6) entweder in die Aufnahme (5) der Welle (4) oder in das an die Welle (4) angeschlossene Aggregat (10) einwechselbar und aus dieser/diesem entnehmbar ist.

11. Vorrichtung nach Anspruch 1, **dadurch gekennzeichnet, dass** das Bearbeitungsaggregat (6) relativ zur Welle (4) drehbar gelagert ist.

12. Vorrichtung gemäß Anspruch 11, bei der die Welle (4), das an der Welle angebrachte Aggregat (10) und/oder das an der Welle (4) oder am Aggregat (10) angebrachte Bearbeitungsaggregat (6) drehbar angetrieben werden kann.

13. Vorrichtung nach einem der vorhergehenden Ansprüche, **dadurch gekennzeichnet, dass** sie ferner eine Strahlungsreflektionseinrichtung (20) aufweist, die eingerichtet und angeordnet ist, um von dem Beschichtungsmaterial reflektierte Strahlung auf das Beschichtungsmaterial zu reflektieren.

14. Vorrichtung nach Anspruch 13, **dadurch gekennzeichnet, dass** die Strahlungsreflektionseinrichtung (20) eine profilierte, insbesondere geriffelte Fläche aufweist, wobei die Profilierung vorzugsweise derart ausgestaltet ist, dass die auf die Profilierung auftreffende Strahlung von einer Austrittsöffnung (26a) für das Beschichtungsmaterial ferngehalten wird.

## Claims

1. Apparatus for processing, in particular coating, workpieces which are preferably made in at least one section of timber, derived timber products, plastic or the like, having:
a radiation device for generating and/or transmitting radiation, preferably a laser beam, and
a spindle unit having a shaft (4) rotatable in a shaft bearing section (4a) and a receptacle (5) for processing tools and/or processing units,
wherein
the shaft (4) and/or a unit (10) mounted on the shaft have in at least one section a cavity (4b, 9a, 2b), and
the radiation device is arranged in such a way that the radiation extends in at least one section within the cavity, **characterised in that** the apparatus further has as a processing unit an applying unit (6) for applying coating material to workpieces.

2. Apparatus according to claim 1, **characterised in that** the cavity opens out in the region of the receptacle (5) for processing tools and/or processing units or in the unit (10) connected to the shaft (4).

3. Apparatus according to claim 1 or 2, **characterised in that** the cavity extends through the whole shaft (4) in the axial direction of the shaft (4).

4. Apparatus according to any of the preceding claims, **characterised in that** the cavity (9a) extends through a tensioning means (9) extending through the shaft (4), which tensioning means (9) extends in particular in the axial direction of the shaft (4) and is designed to receive the unit (10).

5. Apparatus according to any of the preceding claims, **characterised in that** at least one spindle unit is movable in at least one, preferably in three, different directions.

6. Apparatus according to any of the preceding claims, **characterised in that** at least one radiation device is directly or indirectly connected to a spindle unit and is preferably movable with the latter.

7. Apparatus according to any of the preceding claims, **characterised in that** it further has a first transmission device (7a) for radiation which is designed to transmit radiation generated by the radiation device to the cavity of the shaft.

8. Apparatus according to any of the preceding claims, **characterised in that** it further has a second transmission device for radiation which is designed to transmit radiation emerging from the cavity of the shaft to a processing zone, in particular to a workpiece or a component to be joined to the workpiece.

9. Apparatus according to claim 7 or 8, **characterised in that** the at least one transmission device has at least one radiation conductor which is selected from a reflecting or transmitting lens, in particular from the group consisting of optical fibre, mirror, lens and prism.

10. Apparatus according to claim 1, **characterised in that** the processing unit (6) can be inserted either in the receptacle (5) of the shaft (4) or in the unit (10) connected to the shaft (4), and removed from it again.

11. Apparatus according to claim 1, **characterised in that** the processing unit (6) is mounted rotatably relative to the shaft (4).

12. Apparatus according to claim 11, in which the shaft (4), the unit (10) mounted on the shaft and/or the processing unit (6) mounted on the shaft (4) or on the unit (10) can be driven rotatably.

13. Apparatus according to any of the preceding claims, **characterised in that** it further has a radiation reflection device (20) which is designed and arranged to reflect radiation reflected by the coating material onto the coating material.

14. Apparatus according to claim 13, **characterised in that** the radiation reflection device (20) has a profiled, in particular grooved surface, wherein the profiling is preferably designed in such a way that the radiation impinging on the profiling is kept away from an outlet opening (26a) for the coating material.

## Revendications

1. Dispositif d'usinage, en particulier pour le revêtement de pièces composées préférentiellement au moins en partie de bois, matériaux ligneux, matière plastique ou similaire, avec :
un dispositif de rayonnement pour la génération et/ou la transmission d'un rayonnement, préférentiellement d'un faisceau laser, et
une unité de broche avec un arbre (4) rotatif dans une section de palier d'arbre (4a) et un logement (5) pour des outils d'usinage et/ou des ensembles d'usinage,
où
l'arbre (4) et/ou un agrégat (10) appliqué contre l'arbre présentent au moins partiellement une cavité (4b, 9a, 2b), et
le dispositif de rayonnement est disposé de telle manière que le rayonnement s'étend au moins en partie à l'intérieur de la cavité, **caractérisé en ce que** ledit dispositif comporte en outre en tant qu'ensemble d'usinage un ensemble d'application (6) pour l'application de matériau de revêtement sur des pièces.

2. Dispositif selon la revendication 1, **caractérisé en ce que** la cavité débouche au niveau du logement (5) pour des outils d'usinage et/ou des ensembles d'usinage ou dans l'agrégat (10) raccordé à l'arbre (4).

3. Dispositif selon la revendication 1 ou 2, **caractérisé en ce que** la cavité s'étend à travers tout l'arbre (4) dans la direction axiale de l'arbre (4).

4. Dispositif selon l'une des revendications précédentes, **caractérisé en ce que** la cavité (9a) s'étend à travers un moyen de serrage (9) qui s'étend dans l'arbre (4), ledit moyen de serrage (9) s'étendant en particulier dans la direction axiale de l'arbre (4) et étant prévu pour le logement de l'agrégat (10).

5. Dispositif selon l'une des revendications précédentes, **caractérisé en ce qu'**au moins une unité de broche est déplaçable dans au moins une direction, préférentiellement dans trois directions différentes.

6. Dispositif selon l'une des revendications précédentes, **caractérisé en ce qu'**au moins un dispositif de rayonnement est raccordé directement ou indirectement à une unité de broche et est préférentiellement déplaçable avec celle-ci.

7. Dispositif selon l'une des revendications précédentes, **caractérisé en ce que** celui-ci comprend en outre un premier dispositif de transmission (7a) de rayonnement prévu pour transmettre le rayonnement généré par le dispositif de rayonnement à la cavité de l'arbre.

8. Dispositif selon l'une des revendications précédentes, **caractérisé en ce que** celui-ci comprend en outre un deuxième dispositif de transmission de rayonnement prévu pour transmettre le rayonnement sortant de la cavité de l'arbre à une zone d'usinage, en particulier à une pièce ou à un composant à assembler à la pièce.

9. Dispositif selon la revendication 7 ou 8, **caractérisé en ce que** le ou les dispositifs de transmission comprennent au moins un conducteur de rayonnement sélectionné entre une optique de réflexion ou de transmission, en particulier dans le groupe composé de guide d'onde optique, miroir, lentille et prisme.

10. Dispositif selon la revendication 1, **caractérisé en ce que** l'ensemble d'usinage (6) peut être changé soit dans le logement (5) de l'arbre (4) ou dans l'agrégat (10) raccordé à l'arbre (4), et être retiré de ceux-ci.

11. Dispositif selon la revendication 1, **caractérisé en ce que** l'ensemble d'usinage (6) est monté de manière rotative par rapport à l'arbre (4).

12. Dispositif selon la revendication 11, où l'arbre (4), l'agrégat (10) appliqué contre l'arbre et/ou l'ensemble d'usinage (6) appliqué contre l'arbre (4) ou contre l'agrégat (10) peuvent être entraînés en rotation.

13. Dispositif selon l'une des revendications précédentes, **caractérisé en ce que** celui-ci comprend en outre un dispositif de réflexion de rayonnement (20) prévu et disposé pour réfléchir vers le matériau de revêtement le rayonnement réfléchi par le matériau de revêtement.

14. Dispositif selon la revendication 13, **caractérisé en ce que** le dispositif de réflexion de rayonnement (20) présente une surface profilée, en particulier nervurée, le profil étant préférentiellement réalisé de manière à éloigner le rayonnement incident sur le profil d'une ouverture de sortie (26a) pour le matériau de revêtement.
